(19) Europäisches Patentamt

European Patent Office

Office européen des brevets

(11) Publication number: **0 368 690**
**A1**

## (12) EUROPEAN PATENT APPLICATION

(21) Application number: 89402716.8

(22) Date of filing: 03.10.89

(51) Int. Cl.5: **C08G 63/189, B65D 65/38,**
**C08J 5/18**

(30) Priority: 06.10.88 US 254338

(43) Date of publication of application:
16.05.90 Bulletin 90/20

(84) Designated Contracting States:
ES GR

(71) Applicant: **EASTMAN KODAK COMPANY**
**343 State Street**
**Rochester, New York 14650(US)**

(72) Inventor: **Shepherd, Freddie Allen c/o**
**EASTMAN KODAK COMPANY**
**Patent Department 343 State Street**
**Rochester New York 14650(US)**

(74) Representative: **Parent, Yves et al**
**Kodak-Pathé Département Brevets et**
**Licences Centre de Recherches et de**
**Technologie Zone Industrielle**
**F-71102 Chalon-sur-Saône Cédex(FR)**

(54) Modified poly(ethylene 2,6-naphthalenedicarboxylate) having improved processability.

(57) The polyester poly(ethylene 2,6-naphthalenedicarboxylate) modified with monomer units from 0.1 to 10 mol % of at least one dicarboxylic acid or glycol selected from 2,7-naphthalenedicarboxylic acid, diethylene glycol, 1,4-cyclohexanedimethanol, isophthalic acid and terephthalic acid.

EP 0 368 690 A1

## MODIFIED POLY(ETHYLENE 2,6-NAPHTHALENEDICARBOXYLATE) HAVING IMPROVED PROCESSABILITY

### BACKGROUND OF THE INVENTION

#### Field of the Invention

The present invention relates to a novel poly(ethylene 2,6-naphthalenedicarboxylate), sometimes referred herein as PEN, having improved processability. More specifically, it relates to PEN having a reduced melt viscosity which is more easily processed.

#### Description of the Background

Poly(ethylene terephthalate), sometimes referred to herein as PET, is well known as a packaging material. However, gaseous diffusion rates across barriers of PET are higher than desired from materials to be used in most food packaging applications. It is known that polyesters made from naphthalene-2,6-dicarboxylic acid, sometimes referred to herein as NDA, show superior resistance to gas permeability to those made from much more commonly available, and much less costly, terephthalic acid. In particular, the polyester formed from NDA and ethylene glycol, i.e., PEN, is superior to PET in the retention of gaseous molecules in hot-filled food and beverage containers utilizing a monolayer of these polyesters or fabricated from these polyesters. That is, gaseous diffusion rates for oxygen and other gases across barriers of PEN are less than the rates for similar configurations of PET. Packages fabricated from PEN are, therefore, very desirable for hot filled high barrier applications.

PEN may be processed by injection stretch blow molding, reheat stretch blow molding or extrusion blow molding in order to obtain useful containers of PEN having a relatively high melting point, i.e., 510°F (265°C) and high melt viscosity. The high temperature required to process PEN frequently results in excessive drops in molecular weight during processing. Typically, processing temperatures of 575°F (300°C) to more that 600°F (315°C) are required for PEN processing. In order to compensate for the drop in molecular weight, it is necessary to produce higher molecular weight materials than are actually required so that one may end up with the desired molecular weight in the PEN containers actually produced. The higher molecular weights usually result in higher melt viscosity which in turn requires higher processing temperatures. Processing of PEN is therefore cumbersome and molecular weights are difficult to control.

Accordingly, there exists a need to improve the processability of PEN, either by reducing the melting point or by reducing the melt viscosity.

Since having a high melt viscosity could be an advantage for some applications, reducing the melting point of PEN is the desired approach to improving processability.

### SUMMARY OF THE INVENTION

Accordingly, one object of the present invention is to provide PEN having a reduced melting point and therefore capable of being more easily processed.

This and other objects of the present invention will become apparent from the following description of the present invention. According to the present invention, there is provided poly(ethylene 2,6-naphthalenedicarboxylate) modified with monomer units from 0.1 to 10 mol % of at least one dicarboxylic acid or glycol selected from 2,7-naphthalenedicarboxylic acid, diethylene glycol, 1,4-cyclohexanedimethanol, isophthalic acid and terephthalic acid.

The invention is also directed to a method of reducing the melting point of PEN by modifying PEN with 0.1 to 10 mol % of at least one comonomer as specified herein. The invention further provides articles made from PEN.

### DETAILED DESCRIPTION OF THE PREFERRED EMBODIMENTS

The melting point of PEN, as with most polyesters, can be reduced by producing copolymers. However, this sometimes also results in increases in melt viscosity and the choice of comonomers in the production of the copolymers is critical so that PEN is produced having the desired barrier, thermal and strength properties as well as the desired reduction in melting points without increasing the melt viscosity. Applicants have discovered that incorporation of up to 10 mol % of monomer units from 2,7-naphthalenedicarboxylic acid, diethylene glycol, 1,4-cyclohexanedimethanol, isophthalic acid or terephthalic acid will reduce the melting point of PEN without effecting the barrier, thermal and strength properties or causing significant increases in melt viscosity. PEN having up to 10 mol % of monomer units from 2,7-naphthalenedicarboxylic acid are preferred.

The modified PEN described herein is referred to as a polymer. Those skilled in the art will recognize that, in the strict since of the word, the modified PEN is actually a copolymer. For simplicity, however, the modified PEN will be referred to herein as a polymer.

As described herein, the polyester is produced from 100 mol % of a dicarboxylic acid component and 100 mol % of a glycol component. Either may be modified with 0.1 to 10 mol % of the acids or glycols specified. The modifier also may be a combination of at least one acid and at least one glycol as specified herein, wherein the modification would be 0.1 to 10 mol % out of the total 200 mol %.

The modified PEN of the present invention has an inherent viscosity (I.V.) of from 0.60 to 0.90 dl/g, preferably from 0.70 to 0.80 dl/g. This modified PEN has melting points which are reduced by 10° to 18° C relative to unmodified PEN and therefore can be processed at lower temperatures than the modified PEN.

The PEN of the present invention is prepared by conventional methods for condensation polymerization well known by those skilled in the art. For example, the PEN may be bulk polymerized by reacting the monomers in batches or in an extruder, to produce pellets of the PEN. Polymers which are initially produced by bulk polymerization may be further modified by solid-phase polymerization to effect a molecular weight increase. The conventional polymer processing techniques which may be used in the preparation of the present polyester are well known to those skilled in the art.

The PEN according to this invention may be used to mold (e.g., conventional injection blow molding) articles such as containers, extruded into a packaging film, and the like. Conventional additives, such as stabilizers, plasticizers, colorants, etc., may be used.

Surprisingly, the lower melting points and inherent viscosities are obtained from the copolymers, while at the same time retaining the desired barrier, strength and thermal properties. Table 1 presents the physical characteristics for PEN films containing varying amounts of 2,7-naphthalenedicarboxylic acid, diethylene glycol, 1,4-cyclohexanedimethanol, terephthalic acid and isophthalic acid monomer units as well as the control, i.e., an unmodified PEN film. It can be seen from Table 1 that the inherent viscosity of the 2,7-naphthalenedicarboxylic acid monomer unit-containing PEN is substantially below the inherent viscosity of the control PEN. The melting point of each of the modified PEN films is below the melting point of the control, as well. However, the oxygen permeability, water vapor transmission rate, tensile strength, elongation and flexural modulus properties remain substantially similar to the control. Applicants have therefore discovered modified polyesters in which the melting points and inherent viscosities are selectively lowered without causing serious decreases in the desired barrier, thermal and strength properties.

Other features of the invention will become apparent in the course of the following descriptions of exemplary embodiments which are given for illustration of the invention and are not intended to be limiting thereof.

## EXAMPLES

### Example 1 (Control)

2,6-Dimethyl naphthalenedicarboxylate is reacted with ethylene glycol to produce pellets of poly-(ethylene 2,6-naphthalenedicarboxylate) which has an I.V. of 0.50 dl/g. The pellets are crystallized at 200° C and then solid-phase polymerized at 220° C to an inherent viscosity of 0.72 dl/g. This material is dried at 220° C in a desiccant dryer for a minimum of 16 hours and used in a 3/4 inch Brabender Extruder to produce 20 mil film having an inherent viscosity of 0.60 dl/g. A portion of this film is biaxially oriented at 140° C with a T. M. Long Film Stretcher. See Table 1 for film properties.

3

Example 2

Ethylene glycol is reacted with mixtures of 2,6-dimethyl naphthalenedicarboxylate/2,7-dimethyl naphthalenedicarboxylate wherein the 2,7 isomer is either 5 or 10 mol % of the reaction mixture to produce pellets of PEN which have an inherent viscosity of 0.50 dl/g. These samples are crystallized and solid-phase polymerized as described in Example 1 to obtain a material having an inherent viscosity of 0.65 dl/g. These samples are extruded into film as described in Example 1. The sample containing 5 mol % of the 2,7 isomer gives films having an I.V. = 0.61, and the sample containing 10 mol % of the 2,7 isomer gives a film having an I.V. of 0.64. Portions of these film samples are biaxially oriented as described in Example 1. See Table 1 for film properties.

Example 3

PEN is produced as described in Examples 1 and 2 but contains 10 mol % of either diethylene glycol (DEG) or 1,4-cyclohexanedimethanol (CHDM) in the reaction mix to obtain samples of copoly-(ethylene/diethylene 2,6-naphthalenedicarboxylate and copoly(ethylene/1,4-cyclohexanedimethanol 2,6-naphthalenedicarboxylate having an inherent viscosity of 0.73 and 0.82 dl/g, respectively. Film samples are produced as described in Example 1 and properties obtained.

Example 4

PEN is produced as described in Example 1 and 2 but contains 10 mol % of either dimethyl terephthalate (DMT) or dimethyl isophthalate (DMI) in the reaction mix to obtain samples of copoly(ethylene 2,6-naphthalene dicarboxylate/terephthalate or copoly(ethylene 2,6-naphthalenedicarboxylate/isophthalate) each having an inherent viscosity of 0.75 dl/g. Film samples are produced as described in Example 1 and properties obtained.

TABLE 1 - FILM PROPERTIES OF PEN

| | Control | 5% 2,7-NDA | 10% 2,7-NDA | 10% DEG | 10% CHDM | 10% DMT | 10% DM- |
|---|---|---|---|---|---|---|---|
| **Inherent Viscosity, dl/g** | | | | | | | |
| Film IV, dl/g | 0.72 | 0.65 | 0.65 | 0.73 | 0.82 | 0.75 | 0.75 |
| Amorphous | 0.60 | 0.61 | 0.64 | 0.66 | 0.75 | 0.59 | 0.71 |
| Oriented | | | | | | | |
| **Density, g/cc** | | | | | | | |
| Amorphous | 1.328 | 1.329 | 1.328 | 1.331 | 1.317 | 1.332 | 1.332 |
| Oriented | 1.347 | 1.349 | 1.350 | | | | |
| **DSC Transitions, °F** | | | | | | | |
| Glass Transition | 250 | 250 | 245 | 230 | 248 | 238 | 237 |
| Crystallization on Heating | 347 | 390 | 400 | 380 | - | 356 | 375 |
| Melting Point | 510 | 492 | 473 | 480 | - | 490 | 482 |
| Crystallization on cooling | 413 | 374 | 374 | 374 | - | 383 | 383 |
| **Water Vapor Transmission Rate, SPU** | | | | | | | |
| Amorphous | 1.64 | 1.70 | 1.74 | 1.85 | 2.03 | 3.11 | 2.94 |
| Oriented | 0.49 | 0.44 | 0.47 | - | - | - | - |
| **Oxygen Permeability, SPU** | | | | | | | |
| Amorphous | 4.39 | 4.20 | 4.14 | 4.37 | 7.71 | 4.62 | 3.49 |
| Oriented | 1.35 | 1.28 | 1.35 | - | - | - | - |
| **Molecular Weight Distribution** | | | | | | | |
| Mw | 62361 | 49982 | 48598 | 50935 | 60040 | 55687 | 61713 |
| Mn | 23581 | 20275 | 21732 | 21077 | 24127 | 23160 | 24061 |
| Mz | 145178 | 88722 | 87936 | 98635 | 121455 | 107594 | 127674 |
| **Tensile strength, psi x 10³** | | | | | | | |
| Amorphous, MD | 10.8 (760)* | 10.7 (750) | 11.3 (795) | 8.7 (610) | 9.0 (630) | 11.2 (790) | 11.2 (790) |
| TD | 10.2 (720) | 9.0 (630) | 9.2 (650) | 9.7 (680) | 7.8 (550) | 10.1 (710) | 9.7 (680) |
| Oriented, MD | 32.0 (2250) | 30.5 (2145) | 35.7 (2510) | - | - | - | - |
| TD | 32.2 (2265) | 30.2 (2125) | 36.3 (2550) | - | - | - | - |
| **Elongation, %** | | | | | | | |
| Amorphous, MD | 105 | 29 | 64 | 7 | 11 | 20 | 13 |
| TD | 6 | 5 | 6 | 6 | 4 | 7 | 9 |
| Oriented, MD | 34 | 30 | 34 | - | - | - | - |
| TD | 47 | 41 | 46 | - | - | - | - |
| **Modulus, psi x 10³** | | | | | | | |
| Amorphous, MD | 2.58 (180) | 2.79 (196) | 2.81 (198) | 2.60 (182) | 2.27 (160) | 2.49 (175) | 2.53 (178) |
| TD | 2.75 (195) | 2.73 (190) | 2.58 (181) | 2.47 (173) | 2.20 (155) | 2.61 (183) | 2.63 (185) |
| Oriented, MD | 7.31 (510) | 7.33 (515) | 7.11 (500) | - | - | - | - |
| TD | 6.22 (437) | 6.40 (450) | 6.85 (480) | - | - | - | - |

*Parentheses indicate Kg/cm²

As used herein, the inherent viscosity (I.V.) is measured at 25°C using 0.50 g of polymer per 100 mL of a solvent consisting of 60% by weight phenol and 40% by weight tetrachloroethane.

The tests used herein for determination of mechanical properties are described as follows:

| | |
|---|---|
| Water Vapor Transmission Rate | ASTM F372 |
| Tensile Strength | ASTM D638-80 |
| Elongation | ASTM D638-80 |
| Flexural Modulus | ASTM D790-80 |

In the examples, oxygen permeability is determined according to ASTM D 3985, in cubic centimeters permeating a 1 mil thick sample, 100 inches square, for a 24-hour period under oxygen partial pressure difference of one atmosphere at 30°C using a MOCON Oxtran 10-50 instrument.

Where acids are specified herein in the formation of the polyesters or copolyesters, it should be understood that ester forming derivatives of the acids may be used rather than the acids themselves as in conventional practice.

Unless otherwise specified, all parts, percentages, ratios, etc., are by weight. Weight of reinforcing glass fibers and nucleating agent(s) are based on total composition weight.

Obviously, numerous modifications and variations of the present invention are possible in light of the above teachings. It is therefore to be understood that within the scope of the appended claims, the invention may be practiced otherwise than as specifically described herein.

## Claims

1. The polyester poly(ethylene naphthalene-2,6-dicarboxylate) characterized as having monomer units from 0.1 to 10 mol % of at least one dicarboxylic acid or glycol selected from 2,7-naphthalenedicarboxylic acid, diethylene glycol, 1,4-cyclohexanedimethanol, isophthalic acid and terephthalic acid.

2. The polyester of Claim 1, characterized as having 5 to 10 mol % of said comonomer units.

3. The polyester of Claim 1, characterized as having an inherent viscosity of 0.60 to 0.90 dl/g.

4. The polyester of Claim 1, wherein said comonomer units are derived only from 2,7-naphthalenedicarboxylic acid.

5. The polyester of Claim 1, characterized as having a melting point in the range from 187° to 190°C.

6. The method of producing poly(ethylene 2,6-naphthalenedicarboxylate) having a reduced melting point without increasing the melt viscosity thereof characterized by introducing into the polymer repeat units from 0.1 to 10 mol % of a compound selected from 2,7-naphthalenedicarboxylic acid, diethylene glycol, 1,4-cyclohexanedimethanol, isophthalic acid and terephthalic acid.

7. The method according to Claim 6, wherein said compound is 2,7-naphthalenedicarboxylic acid.

8. Film or sheet material comprising the polyester of Claim 1.

9. A food container comprising the polyester of Claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 225 631 (DIAFOIL COMPANY, LIMITED) <br> * Page 6, line 20 - page 7, line 24 * | 1-2 | C 08 G 63/189 <br> B 65 D 65/38 <br> C 08 J 5/18 |
| X | RESEARCH DISCLOSURE, no. 283, November 1987, pages 705-709, New York, US; Disclosed Anonymously:"Poly(ethylene 2,6-naphthalenedicarboxylate) Copolymers Containing 1,4-Cyclohexanedimethanol" <br> * Page 705, paragraph 1 - left column, paragraphs 1,3,5 - right column; page 706, example 3 * | 1-3,8-9 | |
| X | CHEMICAL ABSTRACTS, vol. 108, no. 8, 22nd February 1988, page 49, abstract no. 57334q, Columbus, Ohio, US; Anonymous (USA): "Hot-fillable polyester containers having good barrier properties", & RES. DISCL. 1987, 283, 743-5 <br> * The whole abstract * | 1,9 | |

TECHNICAL FIELDS SEARCHED (Int. Cl.5)

C 08 G

The present search report has been drawn up for all claims

| Place of search | Date of completion of the search | Examiner |
|---|---|---|
| THE HAGUE | 22-01-1990 | MIAO K.Y-P. |